Europäisches Patentamt

European Patent Office

Office européen des brevets

(19)

(11)  EP 1 233 874 B1

(12)  **FASCICULE DE BREVET EUROPEEN**

(45) Date de publication et mention
de la délivrance du brevet:
**11.05.2005  Bulletin 2005/19**

(21) Numéro de dépôt: **00977461.3**

(22) Date de dépôt: **02.11.2000**

(51) Int Cl.⁷: **B60C 17/06**

(86) Numéro de dépôt international:
**PCT/EP2000/010792**

(87) Numéro de publication internationale:
**WO 2001/032450 (10.05.2001 Gazette 2001/19)**

(54) **APPUI DE SECURITE ET ENSEMBLE APPUI ET JANTE POUR PNEUMATIQUE COMPORTANT DES MOYENS DE CENTRAGE ET A MONTAGE FACILITE**

NOTLAUFSTÜTZE UND LEICHT MONTIERBARE STÜTZE/FELGE EINHEIT MIT ZENTRIEREINRICHTUNG FÜR REIFEN

SAFETY SUPPORT AND SUPPORT AND RIM ASSEMBLY FOR TYRE COMPRISING CENTRING MEANS FOR EASY MOUNTING

(84) Etats contractants désignés:
**AT BE CH CY DE DK ES FI FR GB GR IE IT LI LU MC NL PT SE TR**

(30) Priorité: **04.11.1999  FR 9913963**
**23.12.1999  FR 9916434**
**27.01.2000  FR 0001079**

(43) Date de publication de la demande:
**28.08.2002  Bulletin 2002/35**

(73) Titulaires:
• **Société de Technologie Michelin**
**63000 Clermont-Ferrand Cedex 09 (FR)**
• **MICHELIN RECHERCHE ET TECHNIQUE S.A.**
**CH-1763 Granges-Paccot (CH)**

(72) Inventeurs:
• **POMPIER, Jean-Pierre**
**F-63530 Volvic (FR)**

• **LACOUR, Jean-Charles**
**F-63000 Clermont-Ferrand (FR)**
• **DRIEUX, Jean-Jacques**
**F-63530 Volvic (FR)**

(74) Mandataire: **Dequire, Philippe Jean-Marie Denis Michelin & Cie,**
**Service SGD/LG/PI-LAD**
**63040 Clermont Ferrand Cedex 9 (FR)**

(56) Documents cités:
**FR-A- 2 588 802          US-A- 4 252 170**
**US-A- 5 690 762**

• **PATENT ABSTRACTS OF JAPAN vol. 1995, no. 09, 31 octobre 1995 (1995-10-31) -& JP 07 149118 A (BRIDGESTONE CORP), 13 juin 1995 (1995-06-13)**

**Description**

La présente invention concerne les appuis de sécurité pour pneumatiques de véhicules que l'on monte à l'intérieur des pneumatiques, sur leurs jantes, pour supporter la charge en cas de défaillance du pneumatique. Plus particulièrement, elle concerne la liaison entre ces appuis de sécurité et les jantes autour desquelles ils sont montés.

La fonction principale des appuis de sécurité est de supporter la charge en cas de perte sévère de pression de gonflage du pneumatique. Lorsque les pneumatiques sont normalement gonflés, les appuis de sécurité doivent nuire le moins possible aux propriétés dynamiques des pneumatiques. En particulier, ils doivent rester bien centrés autour de la jante pour éviter tout effet de balourd, et cela quelles que soient la température de l'appui et la vitesse de roulage du véhicule. Ils doivent aussi pouvoir être montés autour des jantes des roues des véhicules et démontés de façon aisée.

Le brevet US 5,690,762 présente un appui de sécurité réalisé en un matériau élastique destiné à être monté sur une jante de véhicule de tourisme usuelle à base creuse. Cet appui comporte un corps et une base destinée à venir en contact avec la jante. Cet appui comprend en plus des renforts annulaires orientés circonférentiellement et sensiblement inextensibles dont le diamètre est légèrement supérieur au diamètre des crochets des jantes pour lesquelles l'appui est prévu. La base est constituée de deux zones annulaires dont le diamètre intérieur, à l'état libre, est inférieur à celui des parties de la jante sur lesquelles elles doivent s'appuyer : la compression de ces zones annulaires assure donc un bon centrage de l'appui sur la jante. La fonction des renforts annulaires est notamment d'empêcher, qu'en raison des efforts de centrifugation à haute vitesse, les zones annulaires ne s'étendent jusqu'à perdre le contact avec la jante.

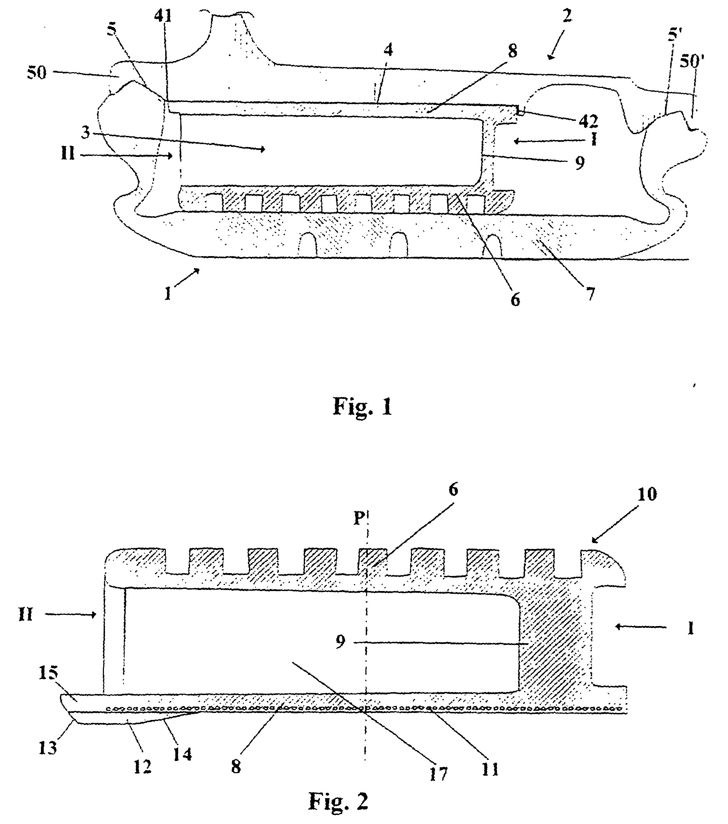

Lorsqu'un appui de sécurité est destiné à équiper une jante en deux parties ou une jante possédant une portée pour un appui dont le diamètre est supérieur à celui de l'un des crochets de la jante telle que présentée à la figure 1, le montage de l'appui de sécurité se fait par enfilage de l'appui sur la portée correspondante de la jante. On peut se référer au brevet US 5 836 366 qui décrit un procédé de montage d'un ensemble formé d'un pneumatique et d'un appui de soutien de bande de roulement sur une telle portée de jante de roue. Il est important que l'appui reste bien centré autour de la portée de la jante tout en conservant un montage et un démontage aisés, ainsi qu'une endurance satisfaisante.

D'autre part, lorsque des renforts annulaires sont nécessaires pour résister aux efforts de centrifugation, on peut disposer les renforts annulaires dans la base. C'est le cas de l'appui divulgué par la demande EP 0 796 747 A1 conforme au préambule de la revendication 1. Une telle position des renforts annulaires facilite la confection de l'appui.

Pour un tel appui, compte tenu des tolérances de fabrication de la jante et de l'appui, il n'est plus possible de disposer des zones annulaires radialement intérieurement dont la compression assure un bon centrage autour de la jante quelle que soit la vitesse tout en assurant un montage et un démontage aisés.

On entend par « plan équatorial » d'un appui de sécurité, tout plan perpendiculaire à l'axe de rotation de l'appui et par « plan équatorial milieu », le plan équatorial disposé au milieu de l'appui.

On entend par « plan axial » d'un appui ou d'une roue, tout plan passant par l'axe de rotation de l'appui ou de la roue.

L'invention a pour objet un appui de sécurité destiné à être enfilé par une opération de translation relative sur une portée d'une jante de roue, ledit appui ayant une face axialement antérieure et une face axialement postérieure et comportant une base destinée à s'adapter autour de ladite portée ainsi qu'un corps relié à ladite base, ladite portée ayant un bord d'engagement et ladite opération de translation consistant à déplacer le bord d'engagement de la portée de la jante de ladite face axialement antérieure de l'appui vers ladite face axialement postérieure, dans lequel la surface radialement intérieure de l'appui présente une pluralité de protubérances de centrage circonférentiellement réparties et dont les parois radialement intérieures s'inscrivent, à l'état libre, sur un diamètre inférieur au diamètre de la portée d'appui de la jante.

Selon un premier aspect, chacune des protubérances de centrage possède en section par un plan axial au moins une portion de profil radialement intérieur dont la distance par rapport à l'axe de l'appui diminue progressivement dans la direction axiale entre une valeur supérieure au rayon du bord d'engagement de la portée de la jante du côté antérieur de l'appui et une valeur inférieure à ce rayon vers le côté postérieur de l'appui pour permettre un engagement à friction entre la jante et l'appui.

La présence des protubérances de centrage permet d'entraîner leur mise en compression avec extension de l'appui lors de son enfilage autour de la portée de la jante. Cela assure un bon centrage de l'appui relativement à la jante. La forme particulière de ces protubérances permet de plus de les transformer en un véritable guide de l'appui qui facilite fortement le montage sur la portée, notamment dans la zone de l'appui où en raison de l'épaisseur des protubérances, le montage entraîne une compression de celles-ci.

Selon un second aspect, l'invention a pour objet un appui de sécurité similaire dans lequel chacune des protubérances de centrage possède en section par un plan axial au moins une portion de profil radialement intérieur dont la distance par rapport à l'axe de l'appui diminue progressivement dans la direction axiale entre une valeur supérieure au rayon du bord d'engagement de la portée de la jante du côté postérieur de l'appui et une valeur inférieure à ce rayon vers le côté antérieur de l'appui.

Cette deuxième caractéristique est particulièrement avantageuse. Elle facilite fortement le démontage des appuis en évitant que les bords des protubérances ne soient bloqués contre toute partie de la jante que les protubérances doivent dépasser.

L'invention a aussi pour objet un appui de sécurité similaire destiné à être enfilé par une opération de translation relative autour d'une portée d'une jante, ledit appui comportant une base destinée à s'adapter autour de ladite portée ainsi qu'un corps relié à ladite base, ledit corps comportant des zones adaptées pour définir des cavités séparant la base et la partie radialement externe de l'appui et réparties autour de l'appui, dans lequel la surface radialement intérieure de ladite base de l'appui présente une pluralité de protubérances de centrage circonférentiellement réparties, et tel qu'au moins certaines desdites protubérances sont disposées radialement intérieurement au droit de cavités correspondantes dudit corps.

Cette disposition a l'avantage de limiter les variations de raideur radiale de l'appui en fonction de l'azimut, par conséquent, lors d'un roulage en appui, de diminuer les variations d'efforts subies par l'appui ainsi que les vibrations produites par les protubérances. Cela entraîne une sensible amélioration de l'endurance de ces appuis en fonctionnement.

Selon un aspect supplémentaire, l'invention a pour objet un appui de sécurité du type général dans lequel la base comporte une zone de résistance sensiblement inextensible circonférentiellement mais flexible dont le diamètre radialement intérieur est légèrement supérieur au diamètre de la portée d'appui de la jante.

Les protubérances disposées radialement intérieurement relativement à la zone de résistance génèrent par leur compression radiale des efforts de serrage lors du montage de l'appui mais ont aussi l'avantage de permettre une mise en polygone de la zone de résistance flexible et très peu extensible. Cette mise en polygone permet d'absorber une certaine variation de diamètre de la portée d'appui de la jante ou de la zone de résistance et ainsi d'assurer un montage aisé de l'appui tout en conservant une excellente résistance à la centrifugation.

De préférence, les protubérances sont disposées de façon symétrique relativement à l'axe de rotation de l'appui.

La largeur axiale des protubérances peut être comprise entre 10 et 50 % de la largeur axiale de la base de l'appui.

Selon un mode de réalisation préférentiel, les protubérances sont disposées axialement du côté de la face axialement postérieure de l'appui.

Cela permet de faciliter le montage en n'imposant une extension de la base ou, le cas échéant, une mise en polygone de la zone de résistance de la base qu'à la fin du montage de l'appui sur la jante.

Les protubérances peuvent présenter axialement, du côté de la face axialement postérieure de l'appui, une face latérale dont l'inclinaison moyenne relativement à l'axe de rotation de l'appui est comprise entre 15 et 55 degrés. Cette face latérale constitue un véritable guide qui facilite l'enfilage de la base de l'appui autour de la portée de la jante.

Les protubérances peuvent présenter axialement, du côté de la face axialement antérieure de l'appui, une face latérale dont l'inclinaison moyenne relativement à l'axe de rotation de l'appui est comprise entre 15 et 55 degrés. Cette face latérale facilite le démontage de l'appui en permettant au côté de l'appui qui quitte le premier la portée de la jante de ne pas venir se bloquer contre le rebord extérieur de la jante.

La section droite des protubérances dans un plan axial peut être de forme trapézoïdale.

De préférence, $\alpha$ étant le demi angle au centre séparant deux protubérances adjacentes et R étant le rayon de la portée d'appui 4 de la jante 2, la hauteur h d'une protubérance satisfait la relation suivante :

$$h \le R\left(\frac{1}{\cos\alpha} - 1\right)$$

Lorsque cette relation est satisfaite, lors de la mise en polygone de la base autour de la portée d'appui de la jante, il y a toujours une zone de contact entre la base et la portée d'appui entre les deux protubérances adjacentes. La valeur limite de la hauteur des protubérances correspond à l'efficacité maximale des protubérances.

La hauteur radiale des protubérances est comprise entre 2 et 10 mm et de préférence entre 3 et 5 mm.

La hauteur radiale des protubérances ne doit pas être trop élevée pour ne pas entraîner, lors d'un roulage en appui, des vibrations qui peuvent nuire à l'endurance de l'appui. Cependant, si ces vibrations sont perceptibles par le conducteur, cela peut constituer un avantage pour lui indiquer qu'il est désormais dans des conditions de roulage qui nécessitent une diminution de sa vitesse de roulage. Une hauteur radiale de l'ordre de 3 à 5 mm apparaît être un bon compromis. L'efficacité du rattrapage de jeu lié à la mise en polygone de la zone de résistance est, pour une hauteur radiale de protubérances donnée directement fonction de leur nombre. Pour une hauteur radiale de 3 à 5 mm, un nombre de protubérances compris entre 3 et 15 permet de combler tous les jeux de fabrication nécessaires.

Lorsque la base de l'appui comprend une pluralité d'extensions s'étendant axialement du côté opposé au premier côté de montage, les protubérances peuvent être disposées aux mêmes azimuts que ces extensions.

La surface radialement intérieure de ladite base peut aussi comporter au moins, entre deux zones circonférentielles de diamètre donné, une zone circonférentielle de diamètre supérieur.

Cet évidement central de la base de l'appui facilite son montage et son démontage en limitant les frottements contre la portée d'appui de la jante.

Les protubérances peuvent être réparties en deux ensembles axialement et circonférentiellement décalés l'un de l'autre. Cela a l'avantage, lors d'un roulage en appui, d'induire un mouvement assimilable à un mouvement de carrossage. Les vibrations qui en résultent peuvent être soit ressenties directement par le conducteur du véhicule, soit détectées par un dispositif approprié.

L'invention a aussi pour objet un ensemble de roue comportant une jante et un appui de sécurité, ledit appui étant destiné à être enfilé par une opération de translation relative autour d'une portée de ladite jante, ayant une face axialement antérieure et une face axialement postérieure et comportant une base destinée à s'adapter autour de ladite portée ainsi qu'un corps relié à ladite base, ladite portée ayant un bord d'engagement et ladite opération de translation consistant à déplacer le bord d'engagement de la portée de la jante de ladite face axialement antérieure de l'appui vers ladite face axialement postérieure, caractérisé en ce que ledit ensemble comporte une pluralité de protubérances circonférentiellement réparties, comprimées radialement entre la base dudit appui et ladite portée de la jante pour créer un serrage mécanique entre ledit appui et ladite portée approprié et assurer le centrage dudit appui sur ladite portée.

Cet ensemble peut être tel que les protubérances sont disposées sur la surface radialement extérieure de la portée de la jante. Dans ce cas, il est avantageux que chacune desdites protubérances de centrage possède en section par un plan axial au moins une portion de profil radialement extérieur dont la distance par rapport à l'axe de ladite jante augmente progressivement, dans la direction axiale en allant du côté du bord d'engagement de ladite portée vers le côté opposé, entre une valeur inférieure au rayon intérieur de la base dudit appui et une valeur supérieure à ce rayon pour permettre un engagement à friction entre la jante et la base de l'appui.

Plusieurs modes de réalisation de l'invention sont maintenant décrits à l'aide du dessin annexé dans lequel :

- la figure 1 présente une coupe axiale partielle d'un ensemble monté équipé d'un appui de sécurité :
- la figure 2 présente une coupe axiale d'un appui selon l'invention ;
- la figure 3 présente en vue de côté l'appui de la figure 2 ;
- la figure 4 présente l'appui de la figure 3 monté sur une portée de jante ;
- la figure 5 présente l'évolution de la pression d'appui des protubérances de l'appui des figures 2 et 3 contre la portée de la jante en fonction des efforts de centrifugation ;
- la figure 6 présente une coupe axiale d'un second mode de réalisation d'un appui ; et
- la figure 7 présente une vue de côté d'un appui selon l'invention ;
- la figure 8 présente une coupe axiale d'un autre appui selon l'invention ;
- les figures 9a et 9b présentent deux coupes axiales d'un autre appui selon l'invention prises dans deux plans axiaux distincts ;.
- la figure 10 présente une coupe axiale d'une jante selon l'invention ; et
- la figure 11 présente une coupe dans un plan équatorial de la jante de la figure 10.

On voit à la figure 1 un ensemble monté comportant un pneumatique 1, une jante 2 de roue et un appui de sécurité 3 disposé autour de la portée 4 de la jante 2. La géométrie particulière de cette jante 2 de roue est notamment décrite dans le brevet US 5 634 993. Elle présente deux rebords de jante, 50 extérieur et 50' intérieur, deux sièges de bourrelets, 5 extérieur et 5' intérieur, de diamètres différents et une portée 4 avec un bord d'engagement 41 et une butée de blocage 42. Cette jante est particulièrement adaptée pour la mise en place aisée de cet appui de sécurité 3. Cet ensemble permet le roulage malgré une baisse de pression importante dans le pneumatique 1. L'appui de sécurité 3 a une face axialement antérieure i et une face axialement postérieure II. L'appui comprend deux parties principales, une base 8 destinée à venir entourer la portée 4 de la jante 2 et un corps 9 relié à la base 8. Le corps 9 comprend un sommet 6 destiné à venir en contact avec la bande de roulement 7 du pneumatique 1 en cas de pression de gonflage nulle ou très faible - c'est ce qui est représenté à la figure 1. Le corps 9 peut être de formes extrêmement variées.

La géométrie de la jante 2 est particulièrement adaptée pour un montage aisé de l'appui de sécurité 3 par enfilage de celui-ci autour de la portée 4. Cet enfilage s'effectue par un mouvement de translation axiale relatif entre l'appui et la portée. Le mouvement de translation consiste à déplacer le bord d'engagement 41 de la portée 4 de la face axialement antérieure i de l'appui 3 vers la face axialement postérieure II jusqu'à la butée de blocage 42.

La figure 2 présente une vue schématique en coupe axiale partielle d'un appui 10 similaire à celui de la figure 1 dans lequel on a incorporé de façon optionnelle une armature de renforcement destinée à reprendre les efforts dus à la centrifugation lors d'un roulage à grande vitesse. Cette armature comprend dans cet exemple une nappe de renforts sensiblement inextensible circonférentiellement 11 disposée dans la base 8. Cette armature constitue la « zone de résistance » de la base 8, c'est-à-dire la zone de la base sensiblement inextensible circonférentiellement. Cette armature peut être composée de renforts tels des fils, câbles, assemblages, ou tout équivalent, par exemple en aramide ou en Nylon. L'armature de renforcement peut aussi être constituée d'un enroulement circonférentiel de renforts en une ou plusieurs couches, elle peut aussi être un binappe croisé dont les renforts sont orientés selon des angles $\pm \alpha$ ; $\alpha$ de l'ordre de 10 à 40 degrés relativement à la direction circonférentielle pour garantir une bonne résistance à la centrifugation de l'appui lors de roulages à vitesse élevée.

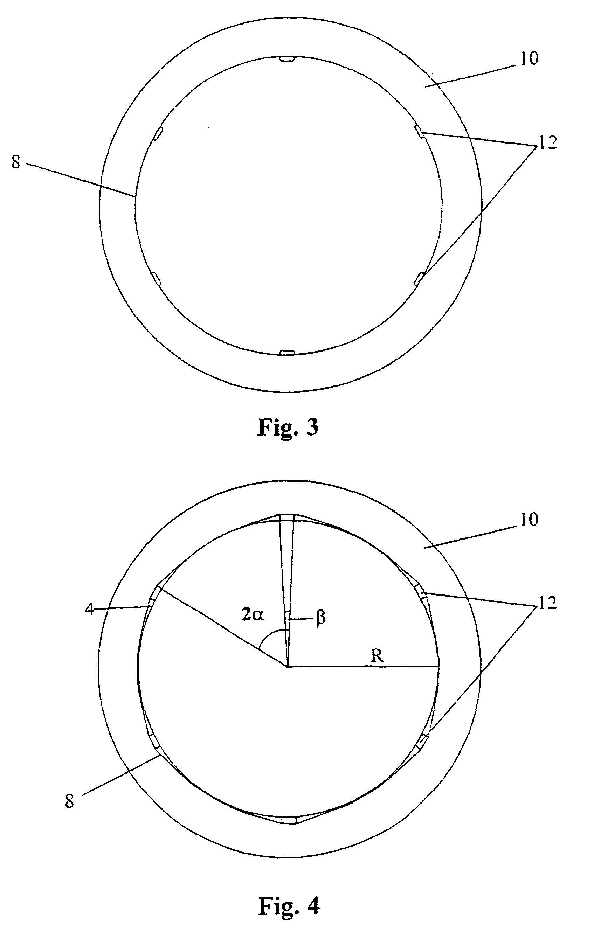

Cet appui 10 comprend un ensemble de protubérances 12 disposées radialement intérieurement relativement à la base 8. Comme le montre la figure 3, ces protubérances sont régulièrement réparties tout autour de la circonférence intérieure de la base 8. Leur nombre est ici de 6. Les protubérances ont une épaisseur de 3 à 5 mm et une longueur circonférentielle de l'ordre de 3 à 5 cm. Les protubérances sont disposées ici d'un seul côté de l'appui, du côté II du plan équatorial milieu P. Le côté I est celui qui est enfilé le premier autour de la portée d'appui 4 de la jante 2 (voir figure 1). Les protubérances disposées du côté II vont donc être en contact avec la portée d'appui 4 seulement à la fin de l'opération de montage. Cela permet de diminuer les efforts de montage nécessaires. La section droite des ces protubérances est sensiblement trapézoïdale. Elles comportent un première face latérale ou biais 14, disposée vers le côté I. Ce premier biais 14 fait avec la direction de l'axe de rotation de l'appui un angle faible de l'ordre de 15 à 20 degrés. Ce biais 14 facilite la mise en place progressive de l'appui autour de la jante. Un second biais 13 est disposé du côté II, extérieur, pour faciliter le démontage de l'appui. Ce biais a une inclinaison moyenne de l'ordre de 45 degrés. Dans l'exemple présenté à la figure 2, la base 8 présente aussi un ensemble d'extensions 15 discontinues circonférentiellement destinées à venir s'appuyer contre le bourrelet extérieur du pneumatique 1 et ainsi bloquer axialement l'appui 10. Ces extensions 15 sont discontinues circonférentiellement pour permettre un démontage aisé du pneumatique 1 de sa jante 2. Les extensions et les protubérances sont disposées aux mêmes azimuts et prennent appui les unes sur les autres comme le montre la coupe de la figure 2.

Il est aussi possible de disposer ces protubérances des deux côtés de l'appui.

Le rôle des protubérances est maintenant décrit dans le cas d'un appui comportant dans sa base une armature de renforcement.

Ce rôle des protubérances 12 est double. Leur première fonction est de générer des efforts radiaux de serrage et de centrage lors du montage de l'appui 10 sur la portée d'appui 4 de la jante 2. Pour un rayon $R_A$ de l'armature de renforcement 11 donné, l'appui 10 peut être monté sur toute portée d'appui 4 dont le rayon R est sensiblement (le rayon $R_A$ peut être pratiquement confondu avec le rayon intérieur de la base 8) compris entre $R_A$ et $R_A$ - h, où h est la hauteur radiale des protubérances. Pour $R \geq R_A$, l'appui ne peut pas être monté, pour $R < R_A$ - h, le jeu est irrécupérable. Lors du montage de l'appui 10 autour de la portée d'appui 4 de la jante 2 et en raison de la grande raideur en extension de l'armature de renforcement 11 et de sa faible raideur en flexion, l'armature 11 va se mettre en polygone autour de la portée 4 (voir figure 4). La base 8 de l'appui est ainsi en contact indirect avec la portée 4 de la jante 2 par l'intermédiaire des 6 protubérances 12 et en contact direct sur des zones disposées circonférentiellement entre deux protubérances 12. Le diamètre effectif intérieur de la base 8 (pratiquement égal à $2R_A$) varie donc sensiblement entre le diamètre de la portée 4 et ce diamètre augmenté de deux fois la hauteur radiale des protubérances 12 comprimées. Le montage de l'appui 11 autour de la portée 4 est ainsi possible avec des efforts très limités, seulement dus au frottement des protubérances sur la portée, à la compression des protubérances 12 et à la flexion de la base 8 de l'appui pour se mettre en polygone. Ce montage s'effectue pratiquement sans qu'il soit nécessaire d'étendre circonférentiellement l'armature 11. Une telle extension nécessiterait des efforts beaucoup trop importants pour que ce soit possible.

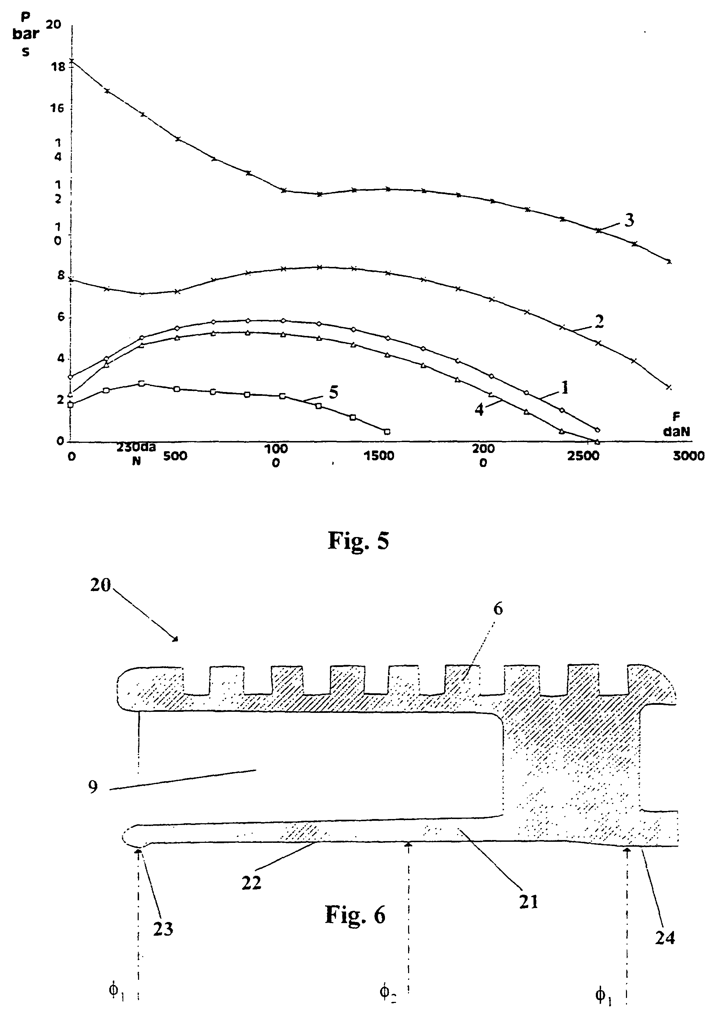

Le second rôle des protubérances est illustrée par une simulation numérique réalisée pour un appui en caoutchouc de largeur 117 mm, de hauteur 50 mm et de rayon intérieur 220 mm. La base de cet appui comprend des protubérances de 3 mm de hauteur disposées sur toute la largeur de l'appui et de 20 mm de longueur circonférentielle. Les courbes de la figure 5 présentent l'évolution de la pression d'appui (P en bars) des protubérances 12 contre la portée 4 de la jante 2 en fonction des efforts de centrifugation (F en daN) pour une tranche d'appui de largeur axiale 10 mm. La masse totale de l'appui est de 4 kg.

La simulation considère pour un rayon d'armature 11 $R_A$ donné, plusieurs rayons R de la portée d'appui de la jante 2 :

- $R = R_A$ - 1,35 mm - courbe 1 - dans ce cas le développement de l'armature 11 correspond exactement au développement du polygone illustré à la figure 4 ;
- $R = R_A$ - 1 mm - courbe 2 ;
- $R = R_A$ - 0,5 mm - courbe 3 ;
- $R = R_A$ - 1, 5 mm - courbe 4 ; et
- $R = R_A$ - 2 mm - courbe 5.

Après le montage, à vitesse nulle, la pression d'appui des protubérances 12 sur la portée 4 est directement liée au rayon de la portée 4. On peut considérer que pour les courbes 1, 4 et 5, cette pression initiale est le résultat des efforts de compression des protubérances qui équilibrent les efforts liés à la flexion de la base 8 lors de sa mise en polygone. Pour les courbes 2 et 3, les efforts augmentent sensiblement en raison de la nécessité d'une compression beaucoup plus forte des protubérances 12.

Lorsque les efforts de centrifugation augmentent, on constate sur les courbes 1, 4 et 5, que la pression d'appui des protubérances 12 sur la portée 4 augmente très sensiblement jusqu'à un maximum. La pression d'appui diminue ensuite jusqu'à une valeur nulle. Cette évolution est liée à l'augmentation des efforts appliqués à l'armature 11 dus à la centrifugation de l'appui qui va entraîner un allongement de l'armature ainsi qu'une modification de la géométrie de celle-ci qui tend à redevenir circulaire. L'augmentation des efforts sur l'armature en forme de polygone implique une augmentation des efforts de compression des protubérances et l'allongement progressif de l'armature entraîne une diminution de cette compression. La présence du maximum doit être liée à la combinaison de ces deux phénomènes. Lorsque l'armature 11 est devenue circulaire et a un développement sensiblement égal à R + h, les efforts de compression des protubérances sont devenus nuls. Il est à noter que la vitesse de rotation correspondant à cet état est, pour tous les cas considérés, l'appui comprenant une armature 11 constituée de trois enroulements d'une nappe de renforts circonférentiels aramide, supérieure à 400 km/h. La valeur de force de centrifugation égale à 230 daN correspond à une vitesse de l'ordre de 170 km/h.

Dans le cas des courbes 2 et 3, on constate une diminution initiale de la pression des protubérances suivie de l'évolution précédemment décrite.

Les courbes précédentes illustrent que les protubérances, grâce à la mise en polygone de l'armature qu'elles induisent au montage, permettent d'obtenir des efforts de centrage suffisants dans une très large gamme de vitesses pour conserver un bon centrage de l'appui, sans balourd, tout en ayant un montage de l'appui aisé.

L'utilisation de telles protubérances est possible tant que la rigidité de flexion de la base 8 des appuis est très inférieure à sa rigidité d'extension. C'est tout à fait le cas pour des appuis réalisés en matériaux élastomères avec des renforts sensiblement inextensibles disposés dans leurs bases. Cet appui 10 est préférentiellement réalisé en un matériau élastomère de module d'élasticité, à 10 % de déformation et une température de 20 degrés Celsius, compris entre 1 et 50 MPa. Ce matériau peut être un élastomère diénique, tel du caoutchouc naturel ou synthétique, ou un élastomère de polyuréthanne.

Lorsqu'un appui ne comporte pas dans sa base une armature de renforcement, le rôle des protubérances lors de l'enfilage de l'appui sur la portée de la jante reste similaire mais, bien entendu, l'évolution des efforts de compression des protubérances en fonction de la vitesse peut être variable en fonction du module d'élasticité des matériaux utilisés.

La figure 4 permet de préciser la relation que doit satisfaire la hauteur des protubérances pour obtenir une efficacité maximale. Lors de la mise en polygone de la base autour de la portée d'appui d'une jante, entre deux protubérances adjacentes, la base doit conserver une zone de contact direct avec la portée d'appui.

Cet état correspond à la relation suivante : $\alpha$ étant le demi angle au centre séparant deux protubérances adjacentes, R étant le rayon de la portée d'appui 4 de la jante 2, la hauteur h d'une protubérance satisfait :

$$h \leq R\left(\frac{1}{\cos \alpha} - 1\right)$$

Lorsque les protubérances sont régulièrement réparties sur la circonférence de la base 8, $\beta$ étant l'angle au centre correspondant à une protubérance et N le nombre de protubérances, on a:

$$\alpha = \frac{\pi}{N} - \frac{\beta}{2}$$

Les deux relations précédentes montrent que, pour rattraper un jeu donné, on peut faire varier à la fois le nombre et la hauteur des protubérances.

La figure 6 présente un autre mode de réalisation d'un appui 20 selon l'invention. La coupe présentée se situe à un azimut différent de ceux des protubérances. Cet appui comprend comme précédemment un corps 9 avec un sommet 6 et une base 21. La base 21 comprend un évidement circonférentiel 22 dont le diamètre $\Phi_2$ est supérieur à celui $\Phi_1$ des zones 23 et 24 qui lui sont adjacentes.

Cela permet de limiter très sensiblement les efforts de frottement entre la base de l'appui et la portée d'appui 4 lors du montage et du démontage.

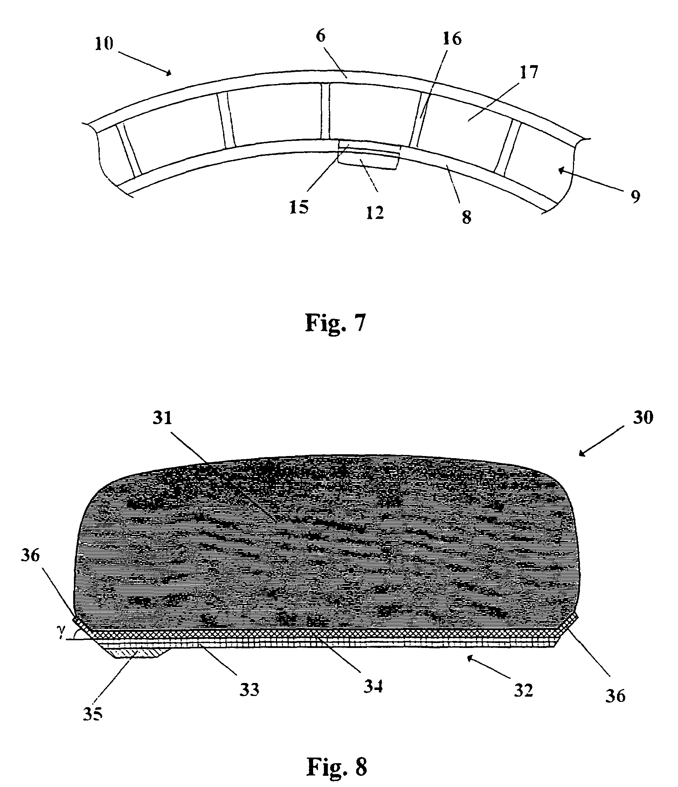

La figure 7 présente une vue de côté de l'appui 10 de la figure 2. Le corps 9 de cet appui comprend des zones de liaison 16 qui relient la base 8 et le sommet 6. Ces zones de liaison définissent entre elles des cavités 17. La figure 7 illustre une disposition préférentielle des protubérances 12 au droit des cavités 17 du corps 9.

Cette disposition permet de ne pas augmenter au droit des protubérances la raideur radiale de l'appui, ce qui limite les variations d'effort subies par l'appui en roulage en appui et ainsi améliore son endurance. On a en effet constaté que, si les protubérances sont disposées au droit d'une zone de liaison 16, c'est à cet endroit que se développe préférentiellement les endommagements en fonctionnement de cet appui.

La figure 8 présente en coupe axiale un appui 30 selon l'invention dont le corps 31 est constitué d'un boudin en caoutchouc alvéolaire à cellules fermées. Cet appui comprend le corps 31, une base 32 comprenant une première armature de renforts annulaires 33 et une seconde armature de renforts 34 orientés perpendiculairement à la direction circonférentielle. La base 32 se prolonge, axialement des deux côtés, par des ailes 36. Ces ailes ont une inclinaison $\gamma$ relativement à la direction axiale comprise entre 30 et 50 degrés. Ces ailes 36 peuvent ne comprendre que l'armature de renforts 34. Ces ailes 36 sont collées au corps 31 et favorisent son maintien latéral lors de roulages gonflé à grande vitesse. La base 32 et le corps 31 sont collés par des colles usuelles. La base 32 comprend un ensemble de protubérances 35 disposées radialement intérieurement à la surface de la base 32. Le fonctionnement de ces protubérances est identique à celui précédemment décrit.

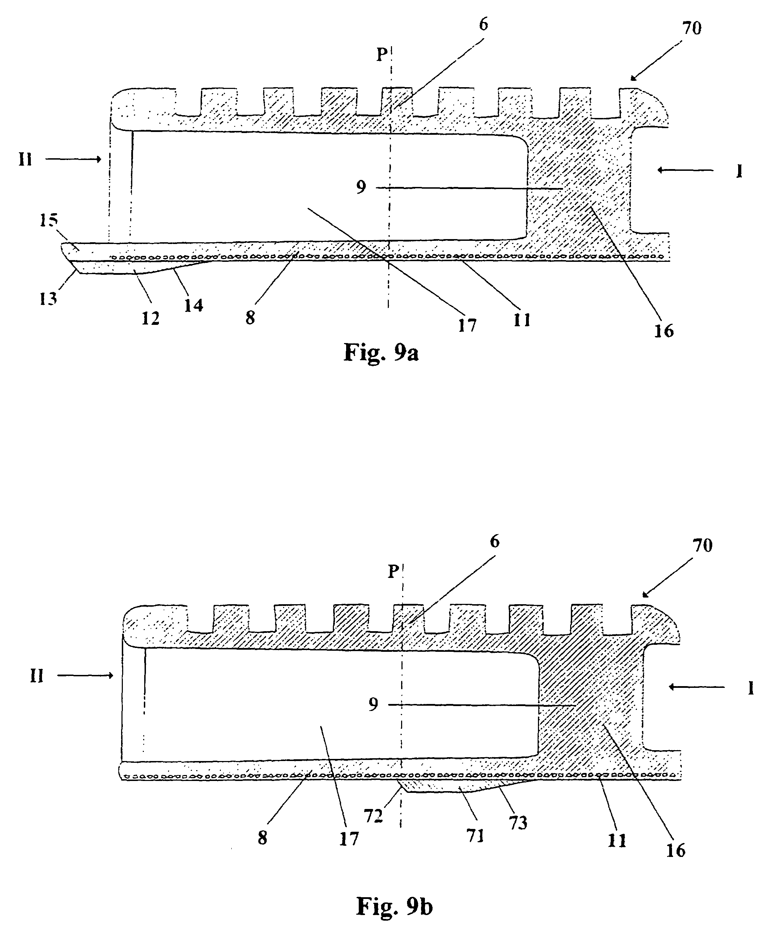

Les figures 9a et 9b présentent deux coupes axiales correspondant à deux plans axiaux distincts d'un appui 70 selon l'invention qui comprend deux ensembles de protubérances de centrage 12 et 71. Les deux ensembles sont décalés axialement, le premier 12 est comme précédemment disposé du côté opposé au premier côté en contact avec la portée d'appui 4 de la jante. Le second ensemble 71 est disposé de l'autre côté du plan équatorial milieu. Les protubérances du second ensemble 71 sont aussi décalées circonférentiellement relativement à celles du premier ensemble 12. Cela a pour but de créer lors d'un roulage en appui un contact alterné de part et d'autre du plan équatorial milieu qui provoque des vibrations similaires à un mouvement de carrossage qui peut être détecté de façon aisée soit par le conducteur, soit par un dispositif approprié. Les protubérances 12 et 71 ont des sections identiques avec des premiers biais 14 et 73 destinés à faciliter l'enfilage de l'appui autour de la portée 4 de la jante et des second biais 13 et 72 destinés à faciliter le démontage de l'appui.

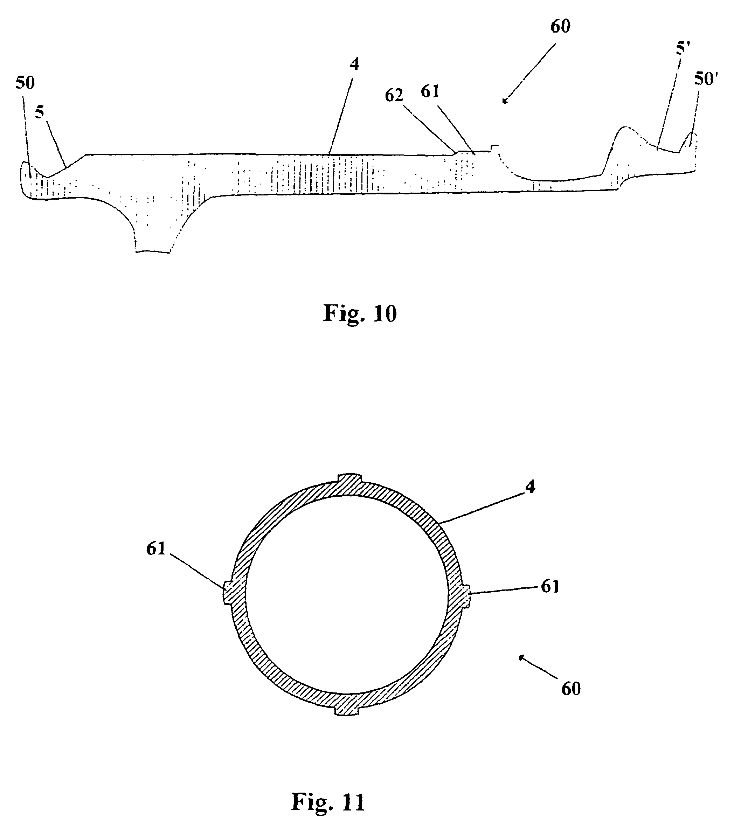

Les figures 10 et 11 présentent une jante 60 selon l'invention. Cette jante a une géométrie très similaire à celle de la figure 1 à l'exception du fait que la portée 4 de cette jante comprend des protubérances 61, régulièrement reparties circonférentiellement. Dans l'exemple présenté ces protubérances sont disposées dans la zone de la portée 4 qui est en contact en dernier avec un appui de sécurité tel que 3. La fonction de ces protubérances est identique à celles disposées sous la base des appuis, à l'exception bien sur du fait que ces protubérances 61 ne sont pas compressibles. Elles comprennent de préférence un biais 62 pour faciliter l'enfilage de l'appui 3.

Comme le montre la figure 11, les protubérances 61 sont régulièrement réparties sur la circonférence de la portée 4, comme précédemment. La figure 11 est une coupe équatoriale de la jante 60 traversant les protubérances 61.

**Revendications**

**1.** Appui de sécurité (10, 20, 30, 70) destiné à être enfilé par une opération de translation relative sur une portée (4) d'une jante de roue (2), ledit appui ayant une face axialement antérieure (I) et une face axialement postérieure (II) et comportant une base (8, 21, 32) destinée à s'adapter autour de ladite portée (4) ainsi qu'un corps (9, 31) relié à ladite base, ladite portée (4) ayant un bord d'engagement (41) et ladite opération de translation consistant à déplacer le bord d'engagement (41) de la portée (4) de la jante (2) de ladite face axialement antérieure (I) de l'appui (10, 20, 30, 70) vers ladite face axialement postérieure (II), **caracterisé en ce que** la surface radialement intérieure de la base (8, 21, 32) de l'appui présente une pluralité de protubérances de centrage (12, 35, 71) circonférentiellement réparties et dont les parois radialement intérieures s'inscrivent, à l'état libre, sur un diamètre inférieur au diamètre de la portée d'appui de la jante.

**2.** Appui de sécurité (10, 20, 30, 70) selon la revendication 1, dans lequel chacune desdites protubérances de centrage (12, 35, 71) possède en section par un plan axial au moins une portion de profil (14, 73) radialement intérieur dont la distance par rapport à l'axe de l'appui diminue progressivement dans la direction axiale entre une valeur supérieure au rayon du bord d'engagement (41) de la portée (4) de la jante (2) du côté antérieur (I) de l'appui et une valeur inférieure à ce rayon vers le côté postérieur (II) de l'appui pour permettre un engagement à friction entre la jante (2) et la base (8, 21, 32) de l'appui.

**3.** Appui de sécurité (10, 20, 30, 70) selon l'une des revendications 1 et 2, dans lequel chacune desdites protubérances de centrage (12, 35, 71) possède en section par un plan axial au moins une portion de profil (13, 72) radialement intérieur dont la distance par rapport à l'axe de l'appui diminue progressivement dans la direction axiale entre une valeur supérieure au rayon du bord d'engagement (41) de la portée (4) de la jante (2) du côté postérieur (II) de l'appui et une valeur inférieure à ce rayon vers le côté antérieur (I) de l'appui.

**4.** Appui de sécurité (10, 20, 70) selon l'une des revendications 1 à 3, dans lequel, ledit corps (9) comportant des zones (16) adaptées pour définir des cavités (17) séparant la base (8, 21) et la partie radialement externe (6) de l'appui et réparties autour de l'appui, au moins certaines desdites protubérances de centrage (12, 71) sont disposées radialement intérieurement au droit de cavités (17) correspondantes dudit corps (9).

**5.** Appui de sécurité (10, 20, 70) selon la revendication 4, dans lequel chacune desdites protubérances de centrage (12, 71) est disposée radialement intérieurement relativement à une cavité (17) dudit corps (9).

**6.** Appui de sécurité (10, 20, 30, 70) selon l'une des revendications 1 à 5, dans lequel ladite base (8, 21, 32) comporte une zone de résistance (11, 33) sensiblement inextensible circonférentiellement mais flexible et dont le diamètre radialement intérieur est légèrement supérieur au diamètre de la portée (4) d'appui de la jante (2).

7. Appui de sécurité (10, 20, 30, 70) selon l'une des revendications 1 à 6, dans lequel lesdites protubérances de centrage (12, 35, 71) sont disposées de façon symétrique relativement à l'axe de rotation de l'appui.

8. Appui de sécurité (10, 20, 30, 70) selon l'une des revendications 1 à 7, dans lequel la largeur axiale desdites protubérances de centrage (12, 35, 71) est comprise entre 10 et 50 % de la largeur axiale de ladite base (8, 21, 32).

9. Appui de sécurité (10, 20, 30, 70) selon l'une des revendications 1 à 8, dans lequel lesdites protubérances de centrage (12, 35) sont disposées axialement du côté de la face axialement postérieure (II) de l'appui.

10. Appui de sécurité (10, 20, 30, 70) selon l'une des revendications 1 à 9, dans lequel lesdites protubérances de centrage (12, 35, 71) présentent axialement, du côté de la face axialement antérieure (I) de l'appui, une face latérale (14, 73) dont l'inclinaison moyenne relativement à l'axe de rotation de l'appui est comprise entre 15 et 55 degrés.

11. Appui de sécurité (10, 20, 30, 70) selon l'une des revendications 1 à 10, dans lequel, lesdites protubérances de centrage (12, 35, 71) présentent axialement, du côté de la face axialement postérieure (II) de l'appui, une face latérale (13, 72) dont l'inclinaison moyenne relativement à l'axe de rotation de l'appui est comprise entre 15 et 55 degrés.

12. Appui de sécurité (10, 20, 30, 70) selon l'une des revendications 1 à 11, dans lequel la section droite desdites protubérances de centrage (12, 35, 71) dans un plan axial est de forme trapézoïdale.

13. Appui de sécurité (10, 20, 30, 70) selon l'une des revendications 1 à 12, dans lequel, $\alpha$ étant le demi-angle au centre séparant deux protubérances adjacentes, R étant le rayon de la portée d'appui de la jante, la hauteur h d'une protubérance satisfait la relation suivante :

$$h \le R\left(\frac{1}{\cos\alpha} - 1\right)$$

14. Appui de sécurité (10, 20, 30, 70) selon l'une des revendications 1 à 13, dans lequel la hauteur radiale desdites protubérances de centrage (12, 35, 71) est comprise entre 2 et 10 mm.

15. Appui de sécurité (10, 20, 30, 70) selon l'une des revendications 1 à 13, dans lequel la hauteur radiale desdites protubérances de centrage (12, 35, 71) est comprise entre 3 et 5 mm.

16. Appui de sécurité (10, 20, 30, 70) selon l'une des revendications 1 à 15, dans lequel le nombre des protubérances de centrage (12, 35, 71) est compris entre 3 et 15.

17. Appui de sécurité (10, 20, 30, 70) selon l'une des revendications 1 à 16, dans lequel, ladite base (8, 21, 32) comprenant une pluralité d'extensions (15) s'étendant axialement du côté (II) opposé au premier côté (I), lesdites protubérances de centrage (12, 35, 71) sont disposées aux mêmes azimuts que ces extensions (15).

18. Appui de sécurité (20) selon l'une des revendications 1 à 17, dans lequel la surface radialement intérieure de ladite base (21) comporte au moins, entre deux zones (23, 24) circonférentielles de diamètre donné, une zone circonférentielle (22) de diamètre supérieur.

19. Appui de sécurité (70) selon l'une des revendications 1 à 18, dans lequel lesdites protubérances de centrage (12, 71) sont réparties en deux ensembles axialement et circonférentiellement décalés l'un de l'autre.

20. Appui de sécurité (30) selon l'une des revendications 1 à 3 et 6 à 19, dans lequel le corps (31) est constitué par un boudin de forme sensiblement toroïdale réalisé en caoutchouc alvéolaire à cellules fermées.

21. Appui de sécurité (30) selon la revendication 20, dans lequel la base (32) se prolonge axialement, des deux côtés, par une aile (36) s'étendant radialement vers l'extérieur avec un angle $\gamma$ compris entre 30 et 50 degrés relativement à la direction axiale.

22. Ensemble de roue comportant une jante (2, 60) et un appui de sécurité (3, 10, 20, 30, 70), ledit appui étant destiné à être enfilé par une opération de translation relative autour d'une portée (4) de ladite jante, ayant une face axialement antérieure (I) et une face axialement postérieure (II) et comportant une base (8, 21, 32) destinée à s'adapter autour de ladite portée (4) ainsi qu'un corps (9) relié à ladite base, ladite portée (4) ayant un bord d'engagement (41) et ladite opération de translation consistant à déplacer le bord d'engagement (41) de la portée (4) de la jante (2, 60) de ladite face axialement antérieure (I) de l'appui vers ladite face axialement postérieure (II), **caractérisé en ce que** ledit ensemble comporte une pluralité de protubérances (12, 35, 61, 71) circonférentiellement réparties, comprimées radialement entre la base (8, 21, 32) dudit appui et ladite portée (4) de la jante pour réaliser un serrage mécanique entre ledit appui et ladite portée approprié et assurer le centrage dudit appui sur ladite portée.

23. Ensemble selon la revendication 22, dans lequel lesdites protubérances (61) sont disposées sur la surface radialement extérieure de ladite portée (4) de ladite jante (60).

24. Ensemble selon la revendication 23, dans lequel chacune desdites protubérances de centrage (61) possède en section par un plan axial au moins une portion de profil radialement extérieur dont la distance par rapport à l'axe de ladite jante augmente progressivement, dans la direction axiale en allant du côté du bord d'engagement (41) de ladite portée vers le côté opposé, entre une valeur inférieure au rayon intérieur de la base dudit appui et une valeur supérieure à ce rayon pour permettre un engagement à friction entre la jante et la base de l'appui.

**Patentansprüche**

1. Notlaufstütze (10, 20, 30, 70), die durch eine Translationsbewegung in Bezug auf einen Träger (4) einer Felge eines Rades (2) übergestülpt werden soll, wobei die Stütze eine axial vordere Seite (I) und eine axial hintere Seite (II) aufweist und eine Basis (8, 21, 32) umfasst, die sich um den Träger (4) anpassen lassen soll, wie auch einen Körper (9, 31), der mit der Basis verbunden ist, wobei der Träger (4) einen Verbindungsrand (41) aufweist und die Translationsbewegung darin besteht, den Verbindungsrand (41) des Trägers (4) der Felge (2) von der axial vorderen Seite (I) der Stütze (10, 20, 30, 70) zu der axial hinteren Seite (II) zu verschieben, **dadurch gekennzeichnet, dass** die radial innere Oberfläche der Basis (8, 21, 32) der Stütze mehrere Vorsprünge zum Zentrieren (12, 35, 71) aufweist, die über den Umfang verteilt sind und bei denen sich in freiem Zustand die radial inneren Wände auf einen Durchmesser einprägen, der kleiner als der Durchmessers des Trägers der Stütze der Felge ist.

2. Notlaufstütze (10, 20, 30, 70) nach Anspruch 1, bei der jeder der Vorsprünge zum Zentrieren (12, 35, 71) einen Querschnitt aufweist, der in einer axialen Ebene wenigstens einen Abschnitt des Profils (14, 73) radial innen aufweist, dessen Abstand von der Achse der Stütze progressiv in axialer Richtung von einem Wert, der größer als der Radius des Verbindungsrandes (41) des Trägers (4) der Felge (2) auf der vorderen Seite (I) der Stütze ist, bis auf einen Wert, der kleiner als dieser Radius auf der hinteren Seite (II) der Stütze ist, abnimmt, so dass eine Reibungsverbindung zwischen der Felge (2) und der Basis (8, 21, 32) der Stütze möglich wird.

3. Notlaufstütze (10, 20, 30, 70) nach Anspruch 1 oder 2, bei der jeder der Vorsprünge zum Zentrieren (12, 24, 71) einen Querschnitt durch eine Axialebene mit wenigstens einem Abschnitt des Profils (13, 72) radial innen aufweist, wobei der Abstand in Bezug auf die Achse der Stütze progressiv in axialer Richtung von einem Wert, der größer als der Radius des Verbindungsrandes (41) des Trägers (4) der Felge (2) auf der Hinteren Seite (II) der Stütze ist, bis zu einem Wert, der kleiner als dieser Radius auf der vorderen Seite (I) der Stütze ist, abnimmt.

4. Notlaufstütze (10, 20, 70) nach einem der Ansprüche 1 bis 3, bei der der Körper (7) Zonen (16) umfasst, die Hohlräume (17) definieren sollen, die die Basis (8, 21) und den radial außen liegenden Teil (6) der Stütze trennen und die um die Stütze verteilt sind, wobei wenigstens einige der Vorsprünge zum Zentrieren (12, 71) radial innerhalb gegenüber den entsprechenden Hohlräumen (17) des Körpers (9) angeordnet sind.

5. Notlaufstütze (10, 20, 70) nach Anspruch 4, bei der jeder der Vorsprünge zum Zentrieren (12, 71) radial innen in Bezug auf einen Hohlraum (17) des Körpers (9) angeordnet ist.

6. Notlaufstütze (10, 20, 30, 70) nach einem der Ansprüche 1 bis 5, bei der die Basis (8, 21, 32) eine Widerstandszone (11, 33) umfasst, die in Umfangsrichtung nicht wesentlich ausgedehnt werden kann, aber flexibel ist und deren Durchmesser radial innen etwas größer als der Durchmesser des Trägers (4) der Stütze der Felge (2) ist.

7. Notlaufstütze (10, 20, 30, 70) nach einem der Ansprüche 1 bis 6, bei der die Vorsprünge zum Zentrieren (12, 35, 71) symmetrisch in Bezug auf die Drehachse der Stütze angeordnet sind.

8. Notlaufstütze (10, 20, 30, 70) nach einem der Ansprüche 1 bis 7, bei der die axiale Breite der Vorsprünge zum Zentrieren (12, 35, 71) zwischen 10 und 50% der axialen Breite der Basis (8, 21, 32) liegt.

9. Notlaufstütze (10, 20, 30, 70) nach einem der Ansprüche 1 bis 8, bei der die Vorsprünge zum Zentrieren (12, 35) axial auf der Seite der hinteren axialen Fläche (II) der Stütze angeordnet sind.

10. Notlaufstütze (10, 20, 30, 70) nach einem der Ansprüche 1 bis 9, bei der die Vorsprünge zum Zentrieren (12, 35, 71) axial auf der Seite der vorderen axialen Fläche (I) der Stütze eine Seitenfläche (14, 73) aufweisen, deren mittlere Neigung in Bezug auf die Drehachse der Stütze zwischen 15 und 55 Grad liegt.

11. Notlaufstütze (10, 20, 30, 70) nach einem der Ansprüche 1 bis 10, bei der die Vorsprünge zum Zentrieren (12, 35, 71) axial auf der Seite der hinteren axialen Fläche (II) der Stütze eine Seitenfläche (13, 72) umfassen, deren mittlere Neigung gegenüber der Drehachse der Stütze zwischen 15 und 55 Grad liegt.

12. Notlaufstütze (10, 20, 30, 70) nach einem der Ansprüche 1 bis 11, bei der der gerade Querschnitt der Vorsprünge zum Zentrieren (12, 35, 71) in einer axialen Ebene trapezförmig ist.

13. Notlaufstütze (10, 20, 30, 70) nach einem der Ansprüche 1 bis 12, bei der $\alpha$ der Halbwinkel in der Mitte ist, den zwei benachbarte Vorsprünge miteinander einschließen, R der Radius des Trägers der Stütze der Felge ist und bei der die Höhe h eines Vorsprungs die folgende Beziehung erfüllt:

$$h \le R\left(\frac{1}{\cos \alpha} - 1\right).$$

14. Notlaufstütze (10, 20, 30, 70) nach einem der Ansprüche 1 bis 13, bei der die radiale Höhe der Vorsprünge für die Zentrierung (12, 35, 71) zwischen 2 und 10 mm liegt.

15. Notlaufstütze (10, 20, 30, 70) nach einem der Ansprüche 1 bis 13, bei der die radiale Höhe der Vorsprünge zum Zentrieren (12, 35, 71) zwischen 3 und 5 mm liegt.

16. Notlaufstütze (10, 20, 30, 70) nach einem der Ansprüche 1 bis 15, bei der die Anzahl der Vorsprünge zum Zentrieren (12, 35, 71) zwischen 3 und 15 beträgt.

17. Notlaufstütze (10, 20, 30, 70) nach einem der Ansprüche 1 bis 16, bei der die Basis (8, 21, 32) mehrere Verlängerungen (15) aufweist, die sich axial auf der Seite (II) gegenüber der ersten Seite (I) befinden, wobei die Vorsprünge zum Zentrieren (12, 35, 71) bei den gleichen Azimutwinkeln wie die Verlängerungen (15) angeordnet sind.

18. Notlaufstütze (20) nach einem der Ansprüche 1 bis 17, bei der die radial innere Oberfläche der Basis (21) wenigstens zwischen zwei Zonen (23, 24) auf dem Umfang mit gegebenem Durchmesser eine Umfangszone (22) mit größerem Radius aufweist.

19. Notlaufstütze (70) nach einem der Ansprüche 1 bis 18, bei der die Vorsprünge zum Zentrieren (12, 71) von zwei Einheiten axial und über den Umfang verschoben zueinander verteilt sind.

20. Notlaufstütze (30) nach einem der Ansprüche 1 bis 3 und 6 bis 19, bei der der Körper (31) aus einem im Wesentlichen toroidförmigen Wulst aus wabenförmigem Kautschuk mit geschlossenen Zellen besteht.

21. Notlaufstütze (30) nach Anspruch 20, bei der sich die Basis (32) auf beiden Seiten durch einen Flügel (36) axial verlängert, der sich in einem Winkel $\gamma$ zwischen 30 und 50 Grad in Bezug auf die axiale Richtung radial nach außen erstreckt.

22. Radeinheit mit einer Felge (2, 60) und einer Notlaufstütze (3, 10, 20, 30, 70), wobei die Stütze durch eine Translationsbewegung in Bezug auf einen Träger (4) der Felge übergestülpt werden soll, die eine vordere axiale Fläche (I) und eine hintere axiale Fläche (II) umfasst und eine Basis (8, 21, 32) umfasst, die sich um den Träger (4) sowie einen Körper (9), der mit der Basis verbunden ist, anpassen lassen soll, wobei der Träger (4) einen Verbindungsrand (41) aufweist und die Translationsbewegung darin besteht, den Verbindungsrand (41) des Trägers (4) der Felge (2, 60) von der vorderen axialen Fläche (I) der Stütze zu der hinteren axialen Fläche (II) zu verschieben, **dadurch gekennzeichnet, dass** die Einheit mehrere Vorsprünge (12, 35, 61, 71) umfasst, die über den Umfang verteilt sind, die radial zwischen der Basis (8, 21, 32) der Stütze und dem Träger (4) der Felge komprimiert werden, um die Stütze und den Träger in geeigneter Weise mechanisch zu verkeilen und die Zentrierung der Stütze auf dem Träger sicherzustellen.

23. Einheit nach Anspruch 22, bei der die Vorsprünge (61) auf der radial äußeren Oberfläche des Trägers (4) der Felge (60) angeordnet sind.

24. Einheit nach Anspruch 23, bei der jeder der Vorsprünge zum Zentrieren (61) im Querschnitt durch eine axiale Ebene wenigstens einen Abschnitt des radialen Profils außen aufweist, dessen Abstand von der Achse der Felge progressiv in axialer Richtung, wenn man von der Seite des Verbindungsrandes (41) des Trägers zu der gegenüberliegenden Seite geht, von einem Wert, der kleiner als der innere Radius der Basis der Stütze ist, bis auf einen Wert, der größer als dieser Radius ist, zunimmt, so dass eine Reibungsverbindung zwischen der Felge und der Basis der Stütze möglich wird.

## Claims

1. A safety support (10, 20, 30, 70) designed to be inserted by a relative translation operation on a wheel rim bearing (4), said support having an axially front face (I) and an axially back face (II) and containing a base (8, 21,32) intended to fit around said bearing (4) as well as a body (9, 31) connected to said base, said bearing (4) having an engagement edge (41) and said translation operation consisting of moving the engagement edge (41) of the rim (2) bearing of said axially front face (I) of the support (10, 20, 30, 70) toward said axially back face (II), **characterized in that** the radially lower surface of the base (8, 21, 32) of the support presents a plurality of circumferentially distributed centering protuberances (12, 35, 71) and the radially inner walls of which are inscribed in free state on a diameter less than the diameter of the rim support bearing.

2. A safety support (10, 20, 30, 70) according to claim 1, wherein each of said centering protuberances (12, 35, 71) possesses in section through an axial plane at least one portion of a radially inner profile (14, 73), whose distance from the axis of the support gradually diminishes in the axial direction between a value exceeding the radius of the engagement edge (41) of the rim (2) bearing (4) on the front side (I) of the support and a value less than that radius toward the back side (II) of the support, in order to permit a friction engagement between the rim (2) and the base (8, 21,32) of the support.

3. A safety support (10, 20, 30, 70) according to one of Claims 1 and 2, wherein each of said centering protuberances (12, 35, 71) possesses in section through an axial plane at least one portion of a radially inner profile (13, 72), whose distance from the axis of the support gradually diminishes in the axial direction between a value exceeding the radius of the engagement edge (41) of the rim (2) bearing (4) on the back side (II) of the support and a value less than that radius toward the front side (I) of the support

4. A support (10, 20, 70) according to one of Claims 1 to 3, wherein, said body (9) containing suitable zones (16) for defining cavities (17) separating the base (8, 21) and the radially outer part (6) of the support and distributed around the support, at least some of said centering protuberances (12, 71) are radially arranged internally opposite corresponding cavities (17) in said body (9).

5. A support (10, 20, 70) according to Claim 4, in which each of said centering protuberances (12, 71) is radially arranged internally opposite a corresponding cavity (17) in said body (9).

6. A support (10, 20, 30, 70) according to one of Claims 1 to 5, wherein said base (8, 21, 32) contains a zone of resistance (11, 33) appreciably inextensible circumferentially, but flexible, and the radially inner diameter of which is slighter greater than the diameter of the rim (2) support bearing (4).

7. A support (10, 20, 30, 70) according to one of Claims 1 to 6, wherein said centering protuberances (12, 35, 71) are symmetrically arranged relative to the axis of rotation of the support.

8. A support (10, 20, 30, 70) according to one of Claims 1 to 7, wherein the axial width of said centering protuberances (12, 35, 71) ranges between 10 and 50% of the axial width of said base (8, 21, 32).

9. A support (10, 20, 30, 70) according to one of Claims 1 to 8, wherein said centering protuberances(12, 35) are axially arranged on the side of the axially back face (II) of the support.

10. A support (10, 20, 30, 70) according to one of Claims 1 to 9, wherein said centering protuberances (12, 35, 71) present axially, on the side of the axially front face (I) of the support, a lateral face (14, 73) whose average inclination relative to the axis of rotation of the support ranges between 15 and 55 degrees.

11. A support (10, 20, 30, 70) according to one of Claims 1 to 10, in which said centering protuberances (12, 35, 71) present axially, on the side of the axially back face (II) of the support, a lateral face (13, 72) whose average inclination relative to the axis of rotation of the support ranges between 15 and 55 degrees.

12. A support (10, 20, 30, 70) according to one of Claims 1 to 11, in which the straight section of said centering protuberances (12, 35, 71) in an axial plane is trapezoid-shaped.

13. A support (10, 20, 30, 70) according to one of Claims 1 to 12, in which, $\alpha$ being the half-angle in the center separating two adjacent protuberances, and R being the radius of the rim support bearing, the height h of a protuberance satisfies the following relation:

$$h \le R\left(\frac{1}{\cos \alpha} - 1\right)$$

14. A support (10, 20, 30, 70) according to one of Claims 1 to 13, in which the radial height of said centering protuberances (12, 35, 71) ranges between 2 and 10 mm.

15. A support (10, 20, 30, 70) according to one of Claims 1 to 13, in which the radial height of said protuberances ranges between 3 and 5 mm.

16. A support (10, 20, 30, 70) according to one of Claims 1 to 15, in which the number of centering protuberances ranges between 3 and 15.

17. A support (10, 20, 30, 70) according to one of Claims 1 to 16, in which, said base ((8, 21, 32) comprising a plurality of extensions (15) stretching axially on the side (II) opposite the first side (I), said centering protuberances (12, 35 71) are arranged at the same azimuths as those extensions (15).

18. A support (20) according to one of Claims 1 to 17, in which the radially inner surface of said base (21) at least contains, between two circumferential zones (23, 24) of given diameters, a circumferential zone (22) of greater diameter.

19. A support (70) according to one of Claims 1 to 18, in which said centering protuberances (12, 71) are distributed in two sets axially and circumferentially offset from one another.

20. A support (30) according to one of Claims 1 to 3 and 6 to 19, in which the body (31) consists of a roughly doughnut-shaped roll made of cellular rubber with closed cells.

21. A support (30) according to Claim 20, in which the base (32) is axially extended, on both sides, by a wing (36) stretching radially outward with an angle γ ranging between 30 and 50 degrees relative to the axial direction.

22. A wheel assembly containing a rim (2, 60) and a safety support (3, 10, 20, 30, 70), said support being designed to be inserted by a relative translation operation around a bearing (4) of said rim, having an axially front face (1) and an axially back face (II) and containing a base (8, 21, 32) intended to fit around said bearing (4) as well as a body (9) connected to said base, said bearing (4) having an engagement edge (41) and said translation operation consisting of moving the engagement edge (41) of the rim (2, 60) bearing (4) of said axially front face (I) of the support to said axially back face (II), **characterized in that** said assembly contains a plurality of circumferentially distributed protuberances (12, 35, 61, 71), compressed radially between the base (8, 21, 32) of said support and said rim bearing (4) in order to create an appropriate mechanical tightening between said support and said bearing and to ensure the centering of said support on said bearing.

23. An assembly according to Claim 22, in which the said protuberances (61) are arranged on the radially outer surface of said rim (60) bearing (4).

24. An assembly according to Claim 23, in which each of said centering protuberances (61) possesses in section through an axial plane at least one radially outer profile portion whose distance from the axis of the bearing of the rim gradually increases in the axial direction from the side of the engagement edge (41) of the bearing to the opposite side from a value less than the inner radius of the base of said support and a value exceeding that radius, in order to permit frictional engagement between the rim and the base of the support.

**Fig. 1**

**Fig. 2**

**Fig. 3**

**Fig. 4**

**Fig. 5**

**Fig. 6**

**Fig. 7**

**Fig. 8**

Fig. 9a

Fig. 9b

Fig. 10

Fig. 11